# EUROPÄISCHE PATENTSCHRIFT

(11) **EP 1 990 565 B1**
(45) Veröffentlichungstag und Bekanntmachung des Hinweises auf die Patenterteilung: **16.07.2014**
(21) Anmeldenummer: 07009010.5
(22) Anmeldetag: 04.05.2007
(51) Int. Cl.: F16J 15/32

(54) **Dichtring und Dichtungsanordnung, umfassend den Dichtring**
Sealing ring and seal assembly, enclosing the sealing ring
Bague d'étanchéité et dispositif de joint comprenant la bague d'étanchéité

(43) Veröffentlichungstag der Anmeldung: 12.11.2008
(73) Patentinhaber: Carl Freudenberg KG, 69469 Weinheim (DE)
(72) Erfinder: Vogt, Rolf, 68723 Oftersheim (DE); Prem, Erich, 69502 Hemsbach (DE)

(56) Entgegenhaltungen:
- DE-B- 1 159 226
- GB-A- 2 147 060
- GB-A- 2 169 378
- US-A- 3 256 027

## Beschreibung

### Technisches Gebiet

Die Erfindung betrifft einen Dichtring, umfassend zumindest eine dynamisch beanspruchte Dichtlippe, die unter elastischer Vorspannung dichtend an eine abzudichtende Oberfläche eines abzudichtenden Maschinenelements anlegbar ist, wobei die Dichtlippe radial außenumfangsseitig von einer ringförmigen Feder umschlossen ist, wobei die Feder die Gestalt einer Schraubendruckfeder aufweist, mit Windungen, die einander in Umfangsrichtung mit Abstand benachbart zugeordnet sind.

### Stand der Technik

Dichtringe sind allgemein bekannt. Die vorbekannten Dichtringe sind beispielsweise als Radialwellendichtringe ausgebildet, in relativ unbeweglichen Gehäusen ortsfest angeordnet und dichten rotierende Wellen ab. Die für die Dichtfunktion eines Radialwellendichtrings notwendige Anpresskraft der Dichtlippe an die abzudichtende Oberfläche wird in diesen Fällen durch die radiale Aufdehnung der elastischen Dichtlippe, die zumeist aus einem elastomeren Werkstoff besteht, und außerdem durch eine Zugfeder erreicht, die die Dichtlippe außenumfangsseitig umschließt.
Werden die vorbekannten Radialwellendichtringe ortsfest in um Achsen umlaufende Gehäuse eingebaut, wie beispielsweise in Radnaben von PKW, LKW oder in Sonderaggregaten wie z. B. in Retadem, müssen im Betrieb auftretende Zentrifugalkräfte, die auf die Dichtlippe und die Zugfeder wirken, durch die Anpresskraft der Dichtlippe und der Zugfeder kompensiert werden. Dies gelingt aber nur einigermaßen zuverlässig, so lange die Drehzahl von Gehäuse und Radialwellendichtring eine Drehzahl von etwa 2000 min⁻¹ nicht überschreiten. Bei höheren Drehzahlen reichen die Anpresskraft der Dichtlippe und die Anpresskraft der Zugfeder nicht mehr aus, die Dichtlippe zuverlässig auf der abzudichtenden Oberfläche zu halten. Die Dichtlippe hebt von der Oberfläche ab. Es kommt zu unerwünscht hohen Leckagen.
Um die Dichtlippe auch bei höheren Drehzahlen länger auf der abzudichtenden Oberfläche zu halten, können auch Zugfedern mit erhöhter Steifigkeit eingesetzt werden, wobei der Anpresskraft der Feder durch das Wickelverhältnis w (mittlerer Windungsdurchmesser der Feder zu Drahtdurchmesser) Grenzen gesetzt sind. Auch bei maximaler Ausnutzung dieses Verhältnisses kann ein Abheben der Dichtlippe bei Drehzahlen größer 5000 min⁻¹ nicht mehr verhindert werden.

Außerdem sind Sonderdichtungen bekannt, die zumindest einen statisch beanspruchten Dichtwulst aufweisen und mit diesem ortsfest auf der Achse montiert sind. Die dynamisch beanspruchte Dichtlippe weist radial nach außen und dichtet die innenumfangsseitige Wand eines rotierenden Gehäuses ab. Die notwendige Anpresskraft der Dichtlippe an das Gehäuse wird durch eine Druckfeder erreicht, wobei eine solche Dichtungsanordnung eine unerwünscht hohe Reibung zwischen Dichtlippe und Gehäuse aufgrund der Stauchung der Dichtlippe und der Druckfeder aufweist.

Aus der GB 2169378 A ist eine Schraubenfeder und deren Verwendung bekannt, wobei die Schraubenfeder eine Anzahl miteinander verbundener Verbindungen aufweist, die im Abstand voneinander angeordnet sind. Jede Windung steht in einem vorgegebenen spitzen Winkel zur Mittellinie der Schraubenfeder, damit die Schraubenfeder ihrer Auslenkung in einer Belastungsrichtung, die sich etwa senkrecht zur Mittellinie der Schraubenfeder erstreckt, in einem vorgegebenen Bereich eine im Wesentlichen konstante Kraft entgegensetzt. Die Enden der Feder können zu einem Ring verbunden sein. Die Aufgabe, die dadurch gelöst werden soll, wird darin gesehen, sich verändernde Gegebenheiten, wie beispielsweise Dimensionsänderungen in Folge von Abnutzung, Temperatur- und Druckänderung, auszugleichen, bei konstanter Kraft der Schraubenfeder. Die Schraubenfeder kann in einem Dichtring aus elastomerem Werkstoff zur Anwendung gelangen, wobei zum dargestellten Ausführungsbeispiel ein Abstand zwischen den Windungen von etwa 0,2 mm beschrieben ist. Der Dichtring dichtet rotierende oder oszillierende Wellen ab und ist in einem stillstehenden Gehäuse angeordnet.

Aus der GB 2147060 A ist ein Dichtring bekannt, mit einer dynamisch beanspruchten Dichtlippe, die unter elastischer Vorspannung dichtend an eine abzudichtende Oberfläche einer abzudichtenden Achse anlegbar ist.

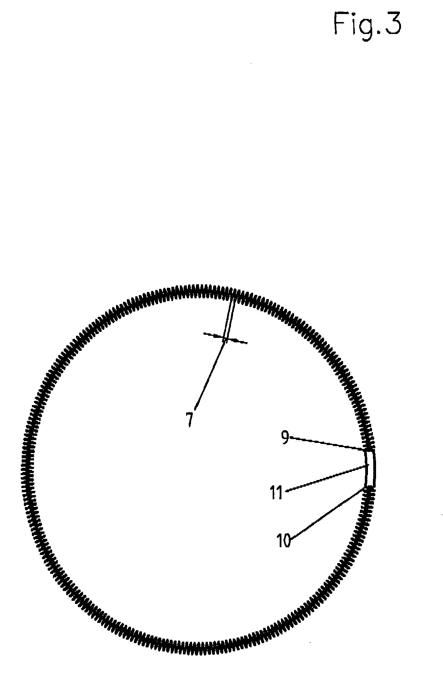

Die Dichtlippe wird von einer Zugfeder auf der abzudichtenden Oberfläche gehalten, wobei die Aufgabe des vorbekannten Dichtrings darin gesehen wird, die Dichtlippe auch bei hohen Drehzahlen des Dichtrings auf der abzudichtenden Oberfläche der Achse zu halten.
Zur Lösung der Aufgabe ist es vorgesehen, dass die Zugfeder durch Halteeinrichtungen auf der abzudichtenden Oberfläche gehalten werden. Diese Halteeinrichtungen können beispielsweise dadurch gebildet sein, dass die Zugfeder im elastomeren Werkstoff der Dichtlippe weitgehend eingebettet ist. Die Zugfeder ist in Fig. 3 schematisch dargestellt, wobei in der Figurenbeschreibung beschrieben ist, dass die Zugfeder von einem Gummikörper umschlossen ist. Die Zugfeder weist einen Windungsdurchmesser von 4 mm auf, wobei der Drahtdurchmesser 0,9 mm beträgt. Nach einem anderen Ausführungsbeispiel beträgt der Windungsdurchmesser 3 mm, während der Drahtdurchmesser 0,45 mm beträgt. Das Wickelverhältnis beträgt demnach im einen Fall etwa 4,5 im anderen Fall 6,7.

Aus der US 3 256 027 A ist ein weiterer Dichtring bekannt, der eine federkraftbeaufschlagte Dichtlippe aufweist. Der vorbekannte Dichtring ist als Radialwellendichtring ausgebildet, zur Abdichtung einer rotierenden Welle, wobei die Reibung zwischen der Dichtlippe und dem abzudichtenden Maschinenelement auf ein Minimum reduziert werden soll. Unter dynamischen Bedingungen soll die statische Dichtlippe von der abzudichtenden Oberfläche abgehoben werden.

Aus der DE 11 59 226 B ist ein Zugfederring für Wellendichtringe bekannt, bei dem die beiden stirnseitigen Enden zusammen als Federschloss ausgebildet sind.

Der Erfindung liegt die Aufgabe zugrunde, einen einfachen Standard-Dichtring der eingangs genannten Art derart weiterzuentwickeln, dass auch bei Drehzahlen des Dichtrings > 5000 min⁻¹ eine sichere Abdichtung der dynamisch beanspruchten Dichtlippe auf der abzudichtenden Oberfläche der abzudichtenden Achse gegeben ist, d. h., dass ein Abheben der Dichtlippe von der abzudichtenden Oberfläche und/oder ein Abspringen der Zugfeder von der Dichtlippe unter den genannten Bedingungen sicher vermieden wird.

### Darstellung der Erfindung

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Dichtring vorgesehen, bei dem die Feder zum Ausgleich von betriebsbedingten Zentrifugalkräften einander benachbarte Windungen aufweist, die eine Steigung von 1,5 mm bis 2,3 mm aufweisen, wobei einander benachbarte Windungen sich weder im herstellungsbedingten Zustand noch während der bestimmungsgemäßen Verwendung berühren. Eine solche Feder hat, bezogen auf herkömmliche Zugfedern, bei denen einander benachbarte Windungen im herstellungsbedingten Zustand des Dichtrings (unbelasteter Zustand) zumindest innenumfangsseitig direkt aneinander anliegen, den Vorteil, dass einander benachbarte Windungen der Feder des erfindungsgemäßen Dichtrings bei gleichem Umfang durch ihre Ausgestaltung auch innenumfangsseitig stets mit umfangsseitigem Abstand zueinander angeordnet sind und dass eine solche Feder eine deutlich geringere Masse aufweist.
Da die auf die Feder wirkende Zentrifugalkraft proportional zur Masse der Feder und der Drehzahl zum Quadrat ist, kann eine Feder, bei der einander benachbarte Windungen stets mit umfangsseitigem Abstand benachbart zueinander angeordnet sind, eine um bis zu 80 % geringere Masse haben.

Die Feder weist die Gestalt einer Schraubendruckfeder auf.

Die einander benachbarten Windungen der ringförmigen Feder weisen eine Steigung von zumindest 1,5 mm auf. Die Federcharakteristik kann unter anderem auch durch die Steigung der Federwicklung beeinflusst werden. Je größer die Steigung der Federwicklung, desto höher ist die Steifigkeit der Feder. Durch die zuvor beschriebene Reduzierung der Masse der Feder, die eine entsprechend geringere Zentrifugalkraft, die im Betrieb des Dichtrings auf die Zugfeder wirkt, zur Folge hat einerseits und die mit größerer Steigung der Federwicklung höhere Steifigkeit der Feder andererseits, können erfindungsgemäße Dichtringe auch dann zur Anwendung gelangen, wenn diese in rotierenden Gehäusen mit Drehzahlen von z. B. 12000 min⁻¹ und mehr betrieben werden. Auch bei diesen hohen Drehzahlen wird durch die spezielle Ausgestaltung der Feder eine zuverlässige Anpressung der Dichtlippe an die abzudichtende Oberfläche erreicht.

Für die meisten gängigen Abmessungen von Dichtringen ist die genannte Steigung von hervorzuhebendem Vorteil. Je größer die Steigung der Federwicklung, desto geringer ist, bei gleichem Umfang der Feder, die Masse und desto größer ist die Federsteifigkeit. Die Steigung beträgt zumindest 1,5 mm.

Die beiden stirnseitigen Enden der herstellungsbedingt geraden Feder können zusammen als Federschloss ausgebildet sein. Hierbei ist von Vorteil, dass sich die Enden der Feder einfach und kostengünstig miteinander verbinden lassen, beispielsweise dadurch, dass die Feder zur Verbindung der beiden Enden miteinander zunächst etwas aufgedreht wird, dass die beiden Enden anschließend miteinander verbunden und die Aufdrehung anschließen selbsttätig wieder rückgängig gemacht wird. Anschließend ist die Feder ringförmig ausgebildet.

Die Feder kann ein Wickelverhältnis w < 4 aufweisen. Das Wickelverhältnis w beschreibt das Verhältnis aus mittlerem Windungsdurchmesser der Feder zum Drahtdurchmesser. Wickelverhältnisse w < 4,5 sind bei herkömmlichen

Federn nicht zu realisieren. Bei der erfindungsgemäßen Feder ist ein Wickelverhältnis < 4 ideal, weil bei gleichem Federdurchmesser eine dickere Drahtstärke, die eine höhere Kraft/Steifigkeit bewirkt benutzt werden kann. Bei richtiger Auslegung des erfindungsgemäßen Dichtrings / der erfindungsgemäßen Dichtungsanordnung ergibt sich bei geringen Gehäusedrehzahlen nur eine vernachlässigbar geringe Anpressung der Dichtlippe an der abzudichtenden Oberfläche.

Die Dichtlippe besteht bevorzugt aus einem elastomeren Werkstoff. Dichtringe mit Dichtlippen aus elastomeren Werkstoffen können besonders einfach an die jeweiligen Gegebenheiten des Anwendungsfalles angepasst werden und sind einfach und kostengünstig herstellbar.

Die Erfindung betrifft außerdem eine Dichtungsanordnung, umfassend einen Dichtring wie zuvor beschrieben, wobei der Dichtring mit seiner Dichtlippe eine abzudichtende Oberfläche einer abzudichtenden Achse unter radialer Vorspannung dichtend umschließt, wobei der Dichtring in einem Gehäuse ortsfest und gemeinsam mit dem Gehäuse um die Achse drehbar angeordnet ist. Eine solche Dichtungsanordnung gelangt beispielsweise zur Abdichtung von Radnaben in PKW oder LKW oder zur Abdichtung von Zentrifugen oder Retardern zur Anwendung. Eine solche Dichtungsanordnung ist auch bei Drehzahlen im Bereich von 12000 min⁻¹ dicht, da die Dichtlippe durch die spezielle, zuvor beschriebene Feder auch bei solchen hohen Drehzahlen nicht von der anzudichtenden Oberfläche abhebt; außerdem ist durch die hohe Steifigkeit der Feder die Gefahr, dass diese abspringt, auf ein Minimum reduziert.

Des Weiteren betrifft die Erfindung die Verwendung einer Schraubendruckfeder als Feder eines Dichtrings und einer Dichtungsanordnung, jeweils wie zuvor beschrieben. Durch eine solche Verwendung können an sich bekannte Dichtringe mit Dichtlippen aus elastomeren Werkstoffen auch dann verwendet werden, wenn sie mit Drehzahlen von mehr als 5000 min⁻¹ um eine Achse rotieren. Teurer Sonderbauformen zur Abdichtung bei diesen Betriebsbedingungen bedarf es daher nicht. Dichtringe, die für diesen speziellen Anwendungsfall ausgezeichnete Gebrauchseigenschaften während einer langen Gebrauchsdauer aufweisen, sind einfach und kostengünstig herstellbar.

### Kurzbeschreibung der Zeichnung

Ein Ausführungsbeispiel des erfindungsgemäßen Dichtrings und der erfindungsgemäßen Dichtungsanordnung wird nachfolgend anhand der Figuren 1 bis 5 näher beschrieben. Die Figuren zeigen jeweils in schematischer Darstellung:
- Fig. 1: ein Ausführungsbeispiel der erfindungsgemäßen Dichtungsanordnung mit dem erfindungsgemäßen Dichtring,
- Fig. 2: die Feder, die in dem erfindungsgemäßen Dichtring gemäß Figur 1 verwendet wird,
- Fig. 3: die Feder aus Figur 2 ringförmig zusammengebaut,
- Fig. 4: eine typische Zugfeder, wie sie in Dichtringen im Stand der Technik zur Anwendung gelangt,
- Fig. 5: die Zugfeder aus dem Stand der Technik gemäß Figur 4.

### Ausführung der Erfindung

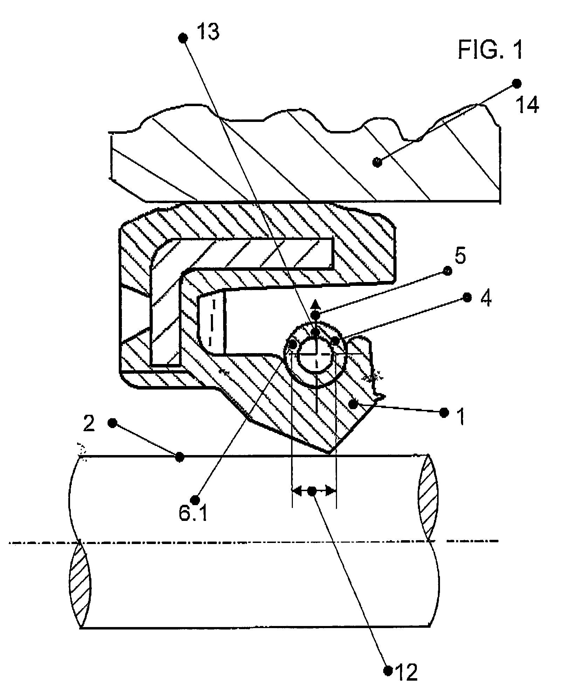

In Figur 1 ist ein Ausführungsbeispiel der erfindungsgemäßen Dichtungsanordnung gezeigt. Die Dichtungsanordnung umfasst den Dichtring, der als Radialwellendichtring ausgebildet ist und eine dynamisch beanspruchte Dichtlippe 1 aufweist. Die dynamisch beanspruchte Dichtlippe 1 umschließt die abzudichtende Oberfläche 2 der abzudichtenden Achse 3 unter elastischer Vorspannung dichtend, wobei die Dichtlippe 1 radial außenumfangsseitig von der ringförmigen Feder 4 umschlossen ist.

Der Dichtring ist ortsfest in das Gehäuse 14 eingepresst und läuft gemeinsam mit dem Gehäuse 14 um die Achse 3 um.

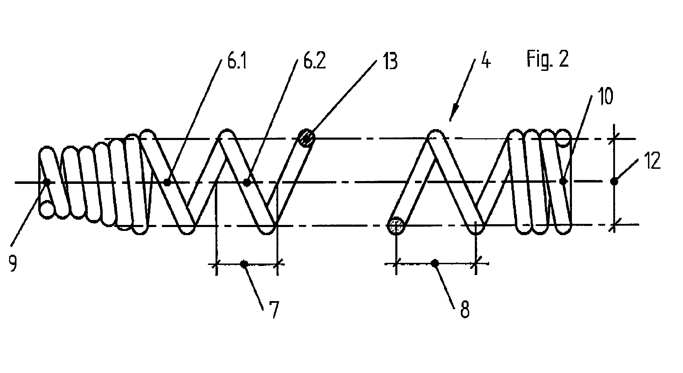

Zum Ausgleich von betriebsbedingten Zentrifugalkräften 5, beispielsweise bei Drehzahlen um 12000 min⁻¹, und um ein Abspringen der Feder 4 vom Dichtring zu verhindern, ist die Feder 4 entsprechend den Figuren 2 und 3 ausgebildet.

In den Figuren 2 und 3 ist die Feder 4 aus Figur 1 als Einzelteil dargestellt. Die Feder 4 weist Windungen 6.1, 6.2, ... auf, die einander mit axialem (Figur 2) / umfangsseitigem (Figur 3) Abstand 7 benachbart zugeordnet sind. Die Feder 4 weist die Gestalt einer Schraubendruckfeder auf, wobei die einander benachbarten Windungen 6.1, 6.2; 6.2, 6.3; ... in dem hier gezeigten Ausführungsbeispiel eine Steigung 8 von 1,5 mm aufweisen. Weder im herstellungsbedingten Zustand (Figur 2), noch während der bestimmungsgemäßen Verwendung (Figur 1 und Figur 3) berühren sich einander benachbarte Windungen 6.1, 6.2; 6.2, 6.3; ....

Wie in Figur 2 zu erkennen, sind die beiden Enden 9, 10 der Feder 4 derart ausgebildet, dass sie, wie in Figur 3 gezeigt, ein Federschloss 11 bilden.

Die Feder 4 weist in dem hier dargestellten Ausführungsbeispiel ein Wickelverhältnis w von 3,8 auf.

Durch die Verwendung einer Schraubendruckfeder als Feder eines Dichtrings und einer Dichtungsanordnung, jeweils wie zuvor beschrieben, wird eine Steifigkeit der Feder erreicht, die proportional zur Steigung ist, wobei die Feder eine geringere Masse aufweist je größer die Steigung ist. Das führt dazu, dass die Feder 4 in Dichtringen zur Anpressung einer Dichtlippe 1 an eine abzudichtende Oberfläche 2 auch dann eingesetzt werden kann und ausgezeichnet ihre Aufgabe erfüllt, wenn die Drehzahl des umlaufenden Dichtrings z. B. 12000 min⁻¹ beträgt.

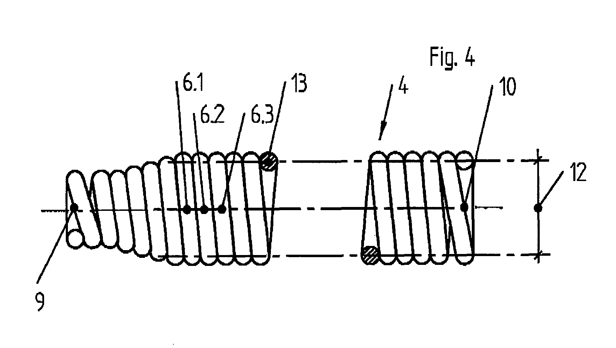

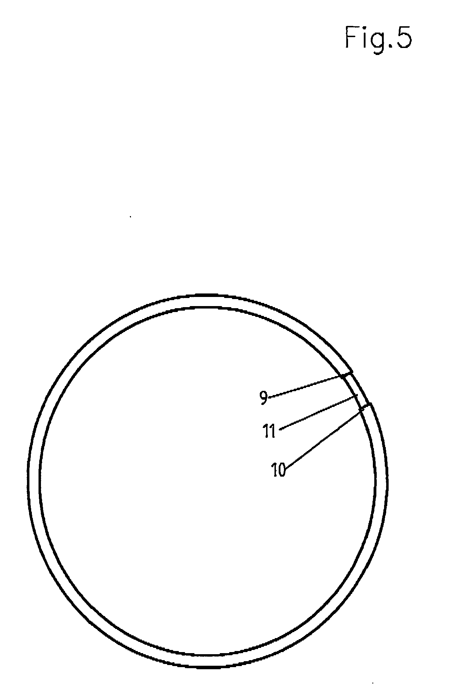

In den Figuren 4 und 5 sind konventionelle Zugfedern gezeigt, wie sie im Stand der Technik zur Anwendung gelangen. Die einander benachbarten Windungen 6.1, 6.2, 6.3, ... liegen direkt aneinander an und die Anzahl der Windungen 6.1, 6.2, 6.3, ... ist vergleichsweise groß, wodurch eine hohe Masse bedingt ist.

Ein Beispiel für die vorteilhafte Funktion des erfindungsgemäßen Dichtrings in einer erfindungsgemäßen Dichtungsanordnung wird nachfolgend näher beschrieben. Bei gleichem Umfang der Feder 4, gleichem mittleren Windungsdurchmesser und gleichem Drahtdurchmesser werden bei konventionellen Zugfedern entsprechend der Figuren 4 und 5 für eine 5 %ige Dehnung 3,5, für eine 10 %ige Dehnung 4,3 N Kraft benötigt. Das Gewicht einer solchen Zugfeder beträgt für Achsen mit 40 mm Durchmesser 1,1 g. Gelangt demgegenüber eine Feder entsprechend den Figuren 2 und 3 zur Anwendung, ist für eine 5 bzw. 10 %ige Dehnung eine Kraft von 4,6 bzw. 8,8 N nötig, wobei das Gewicht einer solchen Feder nur 0,3 g beträgt. Anhand dieses Beispiels ist klar zu erkennen, dass durch die schraubendruck-federförmige Gestalt der Feder 4 einerseits für gleiche Dehnungen wesentlich größere Kräfte benötigt werden und die Feder 4 andererseits eine deutlich geringere Masse aufweist. Dies sind die Gründe dafür, warum eine Feder entsprechend den Figuren 2 und 3 ausgezeichnete Gebrauchseigenschaften in Dichtringen auch bei Drehzahlen des Dichtrings von z. B. 12000 min-1 aufweist, wo hingegen Federn entsprechend den Figuren 4 und 5 bei Drehzahlen im Bereich von etwa 5000 min-1 bereits ein unerwünschtes Abheben der Dichtlippe 1 von der abzudichtenden Oberfläche 2 ermöglichen, so dass es zu einer unerwünschten Leckage kommt.

### Bezugszeichenliste

- 1: Dichtlippe
- 2: abzudichtende Oberfläche
- 3: abzudichtende Achse
- 4: Feder
- 5: Zentrifugalkräfte
- 6.1, 6.2, ...: Windungen
- 7: axialer Abstand
- 8: Steigung
- 9: erstes Ende
- 10: zweites Ende
- 11: Federschloss
- 12: mittlerer Windungsdurchmesser der Zugfeder
- 13: Drahtdurchmesser
- 14: Gehäuse

## Patentansprüche

1. Dichtring, umfassend zumindest eine dynamisch beanspruchte Dichtlippe (1), die unter elastischer Vorspannung dichtend an eine abzudichtende Oberfläche (2) eines abzudichtenden Maschinenelements anlegbar ist, wobei die Dichtlippe (1) radial außenumfangsseitig von einer ringförmigen Feder (4) umschlossen ist, wobei die Feder (4) die Gestalt einer Schraubendruckfeder aufweist, mit Windungen (6.1, 6.2, ...), die einander in Umfangsrichtung mit Abstand (7) benachbart zugeordnet sind, **dadurch gekennzeichnet, dass** das Maschinenelement als Achse (3) ausgebildet ist, dass die Feder (4) zum Ausgleich von betriebsbedingten Zentrifugalkräften (5) einander benachbarte Windungen (6.1, 6.2; 6.2, 6.3;...) aufweist, die eine Steigung (8) von 1,5 mm bis 2,3 mm aufweisen und dass die einander benachbarten Windungen (6.1, 6.2; 6.2, 6.3;...) sich weder im herstellungsbedingten Zustand noch während der bestimmungsgemäßen Verwendung berühren.

2. Dichtring, nach Anspruch 1, **dadurch gekennzeichnet, dass** die beiden stirnseitigen Enden (9, 10) der herstellungsbedingt geraden Feder (4) zusammen als Federschloss (11) ausgebildet sind.

3. Dichtring, nach einem der Ansprüche 1 oder 2, **dadurch gekennzeichnet, dass** die Feder (4) ein Wickelverhältnis w < 4 aufweist.

4. Dichtring, nach einem der Ansprüche 1 bis 3, **dadurch gekennzeichnet, dass** die Dichtlippe (1) aus einem elastomeren Werkstoff besteht.

5. Dichtungsanordnung, umfassend einen Dichtring nach einem der Ansprüche 1 bis 4, wobei der Dichtring mit seiner Dichtlippe (1) eine abzudichtende Oberfläche (2) einer abzudichtenden Achse (3) unter radialer Vorspannung dichtend umschließt, wobei der Dichtring in einem Gehäuse (14) ortsfest und gemeinsam mit dem Gehäuse (14) um die Achse (3) drehbar angeordnet ist.

6. Verwendung einer Schraubendruckfeder als Feder eines Dichtrings gemäß einem der Ansprüche 1 bis 4 in einer Dichtungsanordnung gemäß Anspruch 5.

## Claims

1. Sealing ring, comprising at least one dynamically stressed sealing lip (1) which can be placed under elastic prestress in a sealing manner against a surface (2) to be sealed of a machine element to be sealed, wherein the sealing lip (1) is enclosed radially on the outer circumferential side by an annular spring (4), wherein the spring (4) is in the form of a helical compression spring, with coils (6.1, 6.2, ...) which are assigned adjacent to one another at a distance (7) in the circumferential direction, **characterized in that** the machine element is designed as an axle (3), **in that**, in order to compensate for operationally induced centrifugal forces (5), the spring (4) has mutually adjacent coils (6.1, 6.2; 6.2, 6.3; ...) which have a pitch (8) of 1.5 mm to 2.3 mm, and **in that** the mutually adjacent coils (6.1, 6.2; 6.2, 6.3; ...) are not in contact either in the state as a result of the manufacturing process or during use as intended.

2. Sealing ring according to Claim 1, **characterized in that** the two end-side ends (9, 10) of the spring (4) which is rectilinear as a result of the manufacturing process are designed together as a spring lock (11).

3. Sealing ring according to either of Claims 1 and 2, **characterized in that** the spring (4) has a winding ratio w<4.

4. Sealing ring according to one of Claims 1 to 3, **characterized in that** the sealing lip (1) is composed of an elastomeric material.

5. Seal assembly comprising a sealing ring according to one of Claims 1 to 4, wherein the sealing ring with the sealing lip (1) thereof surrounds a surface (2) to be sealed of an axle (3) to be sealed in a sealing manner under radial prestress, wherein the sealing ring is arranged in a fixed position in a housing (14) and so as to be rotatable together with the housing (14) around the axle (3).

6. Use of a helical compression spring as a spring of a sealing ring according to one of Claims 1 to 4 in a seal assembly according to Claim 5.

## Revendications

1. Bague d'étanchéité, comprenant au moins une lèvre d'étanchéité (1) à contrainte dynamique, qui peut être appliquée par précontrainte élastique de manière hermétique contre une surface (2) à étanchéifier d'un élément de machine à étanchéifier, la lèvre d'étanchéité (1) étant entourée radialement du côté de la périphérie extérieure par un ressort annulaire (4), le ressort (4) présentant la forme d'un ressort de compression à boudin, comprenant des spires (6.1, 6.2, ...) qui sont associées les unes aux autres dans la direction périphérique à distance (7) les unes à côté des autres, **caractérisée en ce que** l'élément de machine est réalisé sous forme d'axe (3), **en ce que** le ressort (4) présente, pour compenser des forces centrifuges (5) dues au fonctionnement, des spires mutuellement adjacentes (6.1, 6.2 ; 6.2, 6.3 ; ...), qui présentent un pas (8) de 1,5 mm à 2,3 mm et **en ce que** les spires mutuellement adjacentes (6.1, 6.2 ; 6.2, 6.3 ; ...) ne sont pas en contact dans l'état de fabrication ni pendant l'utilisation conforme.

2. Bague d'étanchéité selon la revendication 1, **caractérisée en ce que** les deux extrémités (9, 10) du côté frontal du ressort droit (4) à l'état de fabrication sont réalisées ensemble sous forme de fermeture à ressort (11).

3. Bague d'étanchéité selon l'une quelconque des revendications 1 ou 2, **caractérisée en ce que** le ressort (4) présente un index de ressort de w < 4.

4. Bague d'étanchéité selon l'une quelconque des revendications 1 à 3, **caractérisée en ce que** la lèvre d'étanchéité (1) se compose d'un matériau élastomère.

5. Agencement d'étanchéité, comprenant une bague d'étanchéité selon l'une quelconque des revendications 1 à 4, dans lequel la bague d'étanchéité entoure de manière hermétique avec précontrainte radiale, avec sa lèvre d'étanchéité (1), une surface à étanchéifier (2) d'un axe (3) à étanchéifier, la bague d'étanchéité étant disposée de manière fixe dans un boîtier (14) et de manière à pouvoir tourner avec le boîtier (14) autour de l'axe (3).

6. Utilisation d'un ressort de compression à boudin en tant que ressort d'une bague d'étanchéité selon l'une quelconque des revendications 1 à 4, dans un agencement d'étanchéité selon la revendication 5.
